# EUROPEAN PATENT SPECIFICATION

(11) **EP 1 842 732 B1**
(45) Date of publication and mention of the grant of the patent: **16.05.2012**
(21) Application number: 07104100.8
(22) Date of filing: 14.03.2007
(51) Int. Cl.: B60R 19/38

(54) **Vehicle Bumper Protection**
Stoßfängerschutz für ein Fahrzeug
Protection de pare-chocs de véhicule

(30) Priority: 15.08.2006 GB 0616178
(43) Date of publication of application: 10.10.2007
(73) Proprietor: Nissan Motor Manufacturing (UK) Ltd., Cranfield Bedfordshire MK43 0DB (GB)
(72) Inventor: Mitchell, Simon, Cranfield, Bedfordshire MK43 0DB (GB); Bickers, Simon, Cranfield, Bedfordshire MK43 0DB (GB); Kearey, Steven, Cranfield, Bedfordshire MK43 0DB (GB); Urquhart, Iain, Cranfield, Bedfordshire MK43 0DB (GB)
(74) Representative: Hufton, Victoria Alice

(56) References cited:
- FR-A- 1 087 485
- GB-A- 487 419
- GB-A- 811 784
- US-A- 2 170 981
- US-A- 2 954 255
- US-A- 3 905 629
- US-A- 4 461 503
- US-A- 5 518 283

## Description

This invention relates to vehicle protection, particularly protection for vehicle bumpers against damage due to collisions when parking. The invention is particularly concerned with protecting against damage when a vehicle is parked, caused by contact from other vehicles being parked to the front or rear.

Bad driving or poor judgement can result in a moving vehicle inflicting damage by contact with a parked vehicle. Contact between vehicles happens most often during parking, and may be accidental or deliberate. Deliberate contact is known as 'bump parking', a technique often used in European cities, such as Paris or Rome, where the aged road infrastructure leaves little space for vehicles to park.

Bump parking may involve touch parking or, more aggressively, push parking. Touch parking involves the driver of a moving vehicle touching his or her vehicle against vehicles parked to the front or rear, as confirmation that all of the available space has been used. In push parking, by contrast, a driver uses his or her vehicle to try to push surrounding parked vehicles out of the way to create a bigger gap for parking.

As may be expected, the vehicle parts most commonly damaged by parking contact are the front and rear bumpers. Studies have shown that, statistically, the rear bumper is the most frequently damaged part, probably due to the relatively restricted view to the rear of a vehicle.

Current bumper systems are designed to deform and absorb the energy from relatively high-speed collisions and do not effectively resist the kind of damage inflicted by the low-speed but forceful and repetitive collisions characteristic of bump parking and especially push parking. Damage inflicted by such collisions typically involves permanent deformation or cracking of the bumper (especially around its exposed corner sections), scratched paint and scoring of the bumper, and/or damage to the bumper fixings.

All the above modes of damage reduce the ability of the bumper to protect the vehicle from higher-speed crashes. They also significantly reduce the perceived quality of the vehicle, and hence undermine customer satisfaction.

Most modern vehicle bumpers comprise a single large plastics moulding, which often has a painted body-colour finish. Thus, repairing any damage beyond minor scratches requires the entire moulding to be replaced and, if necessary, painted. This requires the vehicle to be taken off the road to a workshop in order to replace and paint the bumper moulding, which may be very expensive in terms of both parts and labour costs. There may also be difficulties in matching the paint finish of the bumper to that of adjacent panels of the vehicle.

To mitigate the cost of bumper repair and replacement, some vehicle bumpers have rubbing strips that protrude slightly from the general surface of the bumper at the corners of the bumper or at other locations at high risk of damage. The intention is that the rubbing strip will be the first point of contact in a parking collision. The rubbing strip is preferably less vulnerable to damage by virtue of being of a more resilient material than the remainder of the bumper. Optionally, the rubbing strip may be left unpainted. Also, the rubbing strip may be detachable from the remainder of the bumper so that, if damaged, the rubbing strip can be replaced without having to replace the whole of the bumper.

The further a rubbing strip protrudes from the general surface of the bumper, the better the protection it will give to the remainder of the bumper. However, it is impractical for a rubbing strip to protrude very far, especially from the styling viewpoint. Consequently, rubbing strips cannot protect the remainder of the bumper from damage in anything other than the most minor of collisions.

A prior art collision protection system for a parked vehicle is known from GB 487, 419; where a steel bumper centre section is pushed outwards on two crank arms when a dashboard-mounted winding handle is rotated manually. FR 1,087,485 discloses a dashboard-mounted hydraulic pump and a chassis-mounted slave cylinder. The latter pushes complete front and rear bumper blades forwards and backwards respectively. US 2,170,981 discloses a windlass mounted on a vehicle interior side trim panel. The windlass uses cables to drive two rack-and-pinion units at the rear end of the vehicle, which push the vehicle rear bumper out. GB 811,784 discloses a single tubular apparatus which may be extended from a bumper overrider, driven by an upright ratchet handle within the vehicle; said apparatus being designed to provide early warning that the vehicle has struck an obstacle when reversing.

It is against this background that the present invention has been made.

From one aspect, the invention resides in a collision protection system for a vehicle, the system comprising a controller, at least one cable-operated actuator and at least one buffer member movable by the actuator in response to the controller between a retracted position for driving the vehicle and an extended position for parking the vehicle; wherein the actuator includes an arm, acting as a cam or crank, configured to bear against or engage with the buffer member; and the arm is pivotable about a pivot axis with respect to a vehicle-mountable housing, said housing including a wall adjacent the pivot axis against which a pivot end of the arm bears when the arm is extended, the wall and the extended arm together defining a load path that transmits collision loads directly from the arm to the housing via the wall.

The system of the invention can be implemented on either or both of the front and rear bumpers of a vehicle. The system is designed to protect the bumpers of a parked vehicle from damage caused by collisions from vehicles attempting to park in the space surrounding the vehicle. Protection is achieved by using buffer members which 'pop out' of the bumper and absorb the energy of the low-speed impacts encountered in parking conditions. Thus the system of the invention can protect the most exposed areas of the bumper and absorb or mitigate the damage caused by a parking vehicle colliding with a parked vehicle. Also, the visibility of the deployed buffer members gives the user greater peace of mind that their vehicle is protected.

The or each buffer member may be biased into or driven into the retracted position, and may be hingeably attached to the vehicle for swinging movement between the extended and retracted positions with respect to the vehicle. The or each buffer member may be carried by a carrier that is adapted for insertion into an aperture in a vehicle bumper. That carrier may support the buffer member for hinging movement with respect to the carrier. The actuator may also be carried by the carrier.

As the system of the invention is targeted primarily at city dwellers, not all customers will require it. Consequently, the system may be designed for fitting as an optional extra by a vehicle dealer. To reduce manpower costs, the system must be as easy as possible to install; thus, the bumpers of a vehicle may have modifications such as pre-defined capped-off apertures or cut-out panels to ease installation of the system. The or each actuator may include an arm acting as a cam or crank that bears against or is engaged with the buffer member. The arm and/or the buffer member may be of a material or construction adapted to absorb kinetic energy.

The invention envisages the use of expendable parts that are low in cost and easy to replace. If a collision occurs at a speed that damages a part of a buffer member, such as a rubbing strip or core, or a part of the actuator that drives movement of the buffer member, especially an arm, the cost replacing those components should be substantially less than the cost of replacing the entire bumper. The intention is that if the bumper is involved in a collision hard enough to damage parts of the buffer member or of the actuator, any or all of those parts can be replaced with minimal effort and cost by a service technician or even by a vehicle owner.

The or each actuator may be driven by a remote drive means. A common drive means may drive a plurality of actuators. This reduces parts complexity and cost, and simplifies the hardware and software of the controller.

The controller may be responsive to vehicle locking and/or vehicle engine ignition to move the or each buffer member. For example, the controller may be configured to detect vehicle locking and, in response, to move the or each buffer member into the extended position. Also, the controller may be configured to detect vehicle engine ignition and, in response, to move the or each buffer member into the retracted position. In these ways, the system of the invention benefits from autonomy: with the possible exception of an on/off switch to enable or disable the system, the user does not need to provide any specific inputs to the functionality of the system. Moreover, in normal driving, the buffer members are automatically fully retracted to return the vehicle to its original shape, maintaining its desired style and aerodynamic qualities.

The system of the invention may further comprise a collision warning means for generating an alarm signal to warn of collision or impending collision. That collision warning means may include a collision sensor that initiates the alarm signal in response to collision with an extended buffer member. This is to deter people who touch park from damaging both their own vehicle and the parked vehicle. When they make contact with the parked vehicle, they are immediately warned that the vehicles are touching, giving them the feedback they require to indicate there is no more room to move in the parking space.

The invention extends to a corresponding method for protecting a vehicle from collisions when parked, the method comprising extending one or more retractable buffer members from the vehicle using an actuator, said actuator including an arm, acting as a cam or crank, configured to bear against or engage with the buffer member; characterized in that the arm is pivotable about a pivot axis with respect to a vehicle-mountable housing, and said housing includes a wall adjacent the pivot axis against which a pivot end of the arm bears when the arm is extended, the wall and the extended arm together defining a load path that transmits collision loads directly from the arm to the housing via the wall.

The invention also encompasses a vehicle having the collision protection system as defined in the appended system claims or operable according to the method defined in the appended method claim.

In order that the invention may be more readily understood, reference will now be made by way of example to the accompanying drawings, in which:
Figure 1 is a rear view of a rear bumper of a vehicle embodying the invention;
Figure 2 is a perspective view of one side of the bumper shown in Figure 1 fitted to a vehicle, with a buffer member extended from the bumper;
Figure 3 is an exploded perspective view of a buffer member shown in Figures 1 and 2, together with a drive mechanism for moving the buffer member in use;
Figure 4 is a sectional partial top view of the bumper of Figures 1 and 2, showing the buffer member and the drive mechanism in a retracted state;
Figure 5 is a sectional side view of the retracted buffer member in relation to the outer skin of the bumper;
Figure 6 is a sectional partial top view corresponding to Figure 4, but showing the buffer member and the drive mechanism in an extended state;
Figure 7 is a schematic enlarged detail view of the drive mechanism;
Figure 8 is a schematic top view of the drive mechanism, when retracted;
Figure 9 is a schematic top view of the drive mechanism, when extended, showing the movement of drive cables necessary to effect extension;
Figure 10 is a schematic top view of the drive mechanism, when retracted, showing the movement of drive cables necessary to effect retraction;
Figure 11 is a schematic part-sectioned partial plan view of the bumper of Figure 1, showing cables and a winding mechanism for activating the drive mechanisms of its two buffer members;
Figure 12 is a schematic enlarged detail view of the winding mechanism shown in Figure 11;
Figure 13 is a block diagram of the electrical and electronic components of a preferred embodiment of the invention; and
Figure 14 is a flow diagram showing the operation of the preferred embodiment in the form of an algorithm.

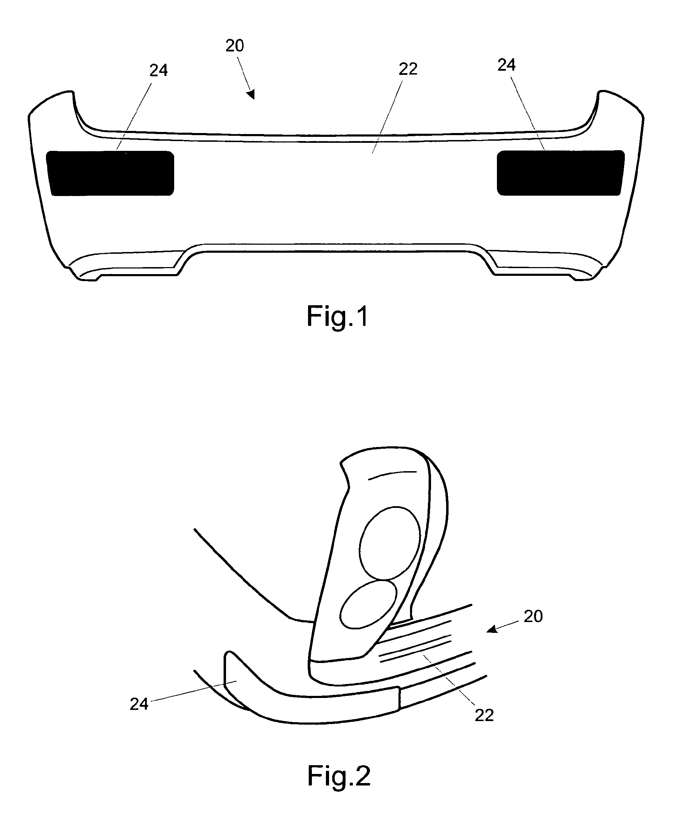

Referring firstly to Figure 1 of the drawings, a vehicle bumper 20, in this case a rear bumper, comprises a one-piece painted plastics moulding 22. The moulding 22 has apertures extending around its corners, one to each side of the bumper 20. The apertures are generally oblong in rear view. Each aperture accommodates a buffer member 24 embodying the invention. In accordance with the invention, each buffer member 24 can be extended from the bumper 20 as illustrated in Figure 2 when the vehicle is parked and then retracted once again into the bumper 20 when the vehicle is to be driven.

In use, having parked the vehicle, the driver turns the ignition off, exits the vehicle and activates its central locking system, for example using a key fob. In response to the driver's command, the central locking system pulses the various lock actuators in the vehicle causing them to lock the vehicle. The buffer members 24 extend from the bumper 20 in response to that pulse, or previously in response to the ignition being turned off, and remain extended for as long as the vehicle is parked. Upon returning to the parked vehicle to drive off again, the driver unlocks the doors and turns on the ignition system to start the engine. The buffer members 24 retract back into the bumper 20 before driving off, and remain retracted for as long as the vehicle is being driven. For this purpose, the buffer members 24 may retract in response to the unlocking pulse of the lock actuators or, preferably, in response to the ignition system being turned on. The latter event suggests that the vehicle is about to be driven whereas the former event could simply mean that the driver is opening the vehicle to retrieve an item from its interior before leaving the parked vehicle again.

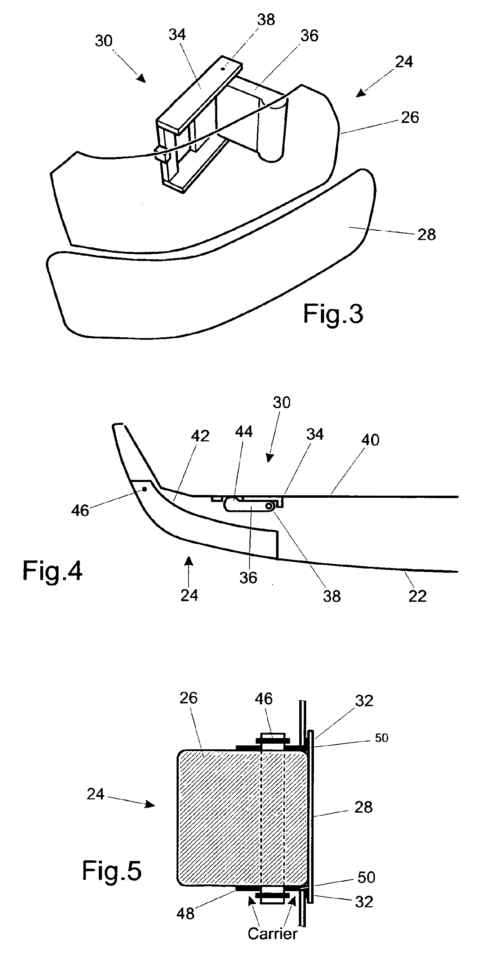

The structure of one of the buffer members 24 is shown in Figure 3. The buffer member 24 is generally J-shaped in top plan view where it curves around the corner of the bumper 20. The buffer member 24 comprises a core 26 supporting a rubbing strip 28 that follows the general external contour of the bumper 20 to define the intended area of contact during a parking collision. A drive mechanism 30 concealed behind the buffer member 24 and the bumper 20 acts upon the core 26 to extend the buffer member 24 in use.

The core 26 is a J-shaped block of energy-absorbing (EA) foamed plastics, slightly narrower than the width of the associated aperture in the bumper moulding 22 so as to be freely movable within the aperture. EA foam benefits from low manufacturing and material costs and so is cheap to supply and to replace; also, EA foam is light in weight. Most importantly, EA foam absorbs the energy from low-speed impacts, damping forces from a collision; this reduces the possibility of damage to the remainder of the bumper 20 or indeed to adjacent panels and lamp clusters of the vehicle.

There are many energy-absorbing foams on the market that may be suitable to resist low-speed impacts. One example is expanded polypropylene (EPP), which is widely used in the automotive field in energy-absorbing applications.

The rubbing strip 28 is of a low-cost scratch-resistant and resilient plastics material such as polypropylene, which gives the appearance of a conventional black or grey grained protective bump-strip. The rubbing strip 28 preferably has a thickness of between 5 mm and 10 mm and may be attached to the core 26 with adhesive, by welding, or with fasteners such as clips. It is also possible for the core 26 and the rubbing strip 28 to have mutually-engageable formations whereby relative movement, such as sliding, brings one part into engagement with the other. In another arrangement, the rubbing strip 28 could be integral with the core 26, with the rubbing strip 28 being a skin moulded with the core 26 as a single piece, for example by an overmoulding process. However, it is advantageous for the rubbing strip 28 to be separable from the core 26 so that if the rubbing strip 28 is damaged, it may be replaced without replacing the core 26 or indeed the whole buffer member 24. There is also the potential of customising a vehicle with personalised interchangeable rubbing strips bearing different colours or patterns, for example.

When the buffer member 24 is retracted as shown in Figure 4, the rubbing strip 28 can lie substantially flush with the outer surface of the bumper moulding 22 or may protrude slightly from that surface. For example, the rubbing strip 28 may extend beyond the width of the core 26 and slightly beyond the width of the aperture in the bumper moulding 22. As best shown in Figure 5, this defines a peripheral flange 32 of the rubbing strip 28 that overlies the edge of the aperture and, when the buffer member 24 is retracted, lies outside the outer surface of the bumper moulding 22. This arrangement locates the buffer member 24 against the outer surface of the bumper moulding 22 when retracted, and conceals the edge of the aperture into which the buffer member 24 fits.

Referring particularly to Figures 3, 4 and 6, the drive mechanism 30 comprises an arm housing 34 and an arm 36 that is pivotally attached to the arm housing 34 by a pivot 38. The arm housing 34 is attached to the body structure 40 of the vehicle. A motor and ECU, to be described later, actuate and control the system, including extension and retraction of the buffer members 24.

The arm housing 34 provides the arm 36 with a pivot point and a solid mounting to a convenient part of the vehicle body structure 40. The arm housing 34 also provides mounting locations for operating cables, as will be explained.

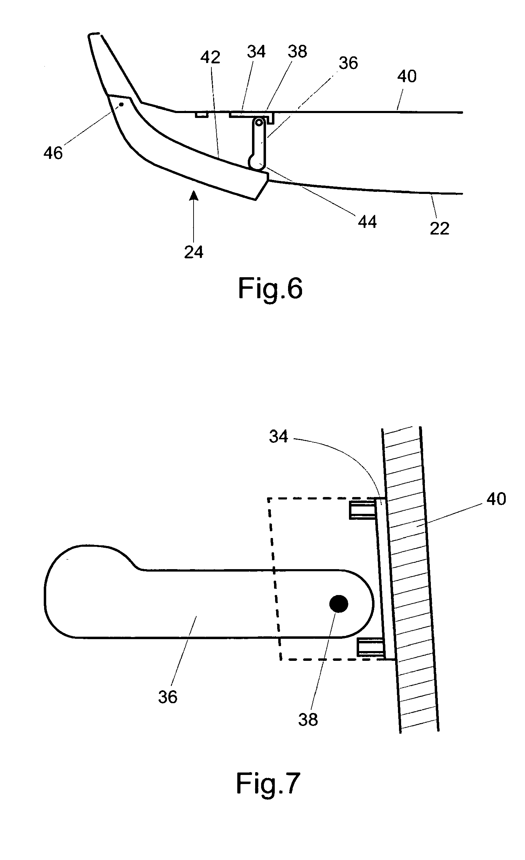

When retracted, the arm 36 lies within the arm housing 34, extending transversely with respect to the centre line of the vehicle. When extended, the arm 36 swings outwardly about the pivot 38 through about 90° from the arm housing 34 and, in doing so, bears against the rear surface 42 of the core 26 in the manner of a cam. The arm housing 34 is designed so that any collision force exerted through the extended arm 36 is transmitted to the housing 34, and from there to the vehicle structure 40, directly from the arm 36 and not wholly through the pivot 38. For this purpose, it will be noted that the end of the arm 36 associated with the pivot 38 bears against the inside of the arm housing 34 when the arm 36 is fully extended. This arrangement is best appreciated from the enlarged view of Figure 7.

The arm 36 has an enlarged free end 44 that is curved in plan view to facilitate sliding across the rear surface 42 of the core 26 as the arm 36 swings. This causes the inner end of the buffer member 24 to swing outwardly about a substantially vertical hinge 46 disposed near an outer end of the buffer member 24, hence extending the buffer member 24 for protection when parking. The hinge 46 is mounted to the bumper 20. When the arm 36 is retracted again for normal driving, the buffer member 24 is biased by spring-loading to retract tightly against the outer surface of the bumper 20.

The strength of the spring loading required to return the buffer member 24 to the retracted position depends upon the retaining force needed to keep the buffer member 24 in the retracted position and particularly to prevent the buffer member 24 generating noise or vibration by rattling within its aperture when the vehicle is moving. For this purpose, a return spring (not shown) may be connected between the rear surface 42 of the core 26 and a solid point on the body structure 40 or on a component fixed to that structure 40, such as the arm housing 34. Alternatively the spring could be incorporated into the hinge 46 for ease of installation.

Figure 5 shows that the core 26 and the rubbing strip 28 of the buffer member 24 are retained in the bumper 20 by a carrier 48 that fits into and lines an aperture in the bumper moulding 22, the carrier 48 being pressed into the aperture until a flange 50 of the carrier 48 bears against the periphery of the aperture to limit further insertion. It is envisaged that in production embodiments of the invention, the carrier 48 will be an injection-moulded plastics ring that clips into the aperture in the bumper moulding 22 and incorporates the hinge 46 and a return spring. Indeed, the buffer member 24, carrier 48 and return spring may all be supplied as one cassette-like unit to fit into a bumper moulding 22 having the aperture pre-cut.

As mentioned above, the arm housing 34 and arm 36 are designed such that when the arm 36 is fully extended, the arm 36 can transfer part of a collision force applied to the buffer member 24 directly back to the body structure 40 without involving the bumper 20, thereby reducing damage to the bumper 20. When retracted, the arm 36 folds back behind conventional crash protection elements (not shown) forming part of the bumper structure, such as crush cans, stays or a bumper beam. This allows those elements to perform their normal functions at higher impact speeds, without hindrance from the arm 36.

The EA foam of the core 26 is able to take impact energy from any direction when the buffer member 24 is extended. When the impact is parallel to the centre line of the vehicle, all of the impact energy is transmitted along the arm 36. When the impact is at another angle, some energy is transmitted to the hinge 46. As the hinge 46 is mounted to the bumper 20, the bumper 20 will deflect slightly in that event. However as the core 26 is close to the vehicle body structure 44 in the region of the hinge 46 (possibly as close as 5 mm) the core 26 quickly bears against the body structure 44 and absorbs impact energy and deformation without deforming the bumper 20 beyond its elastic limit.

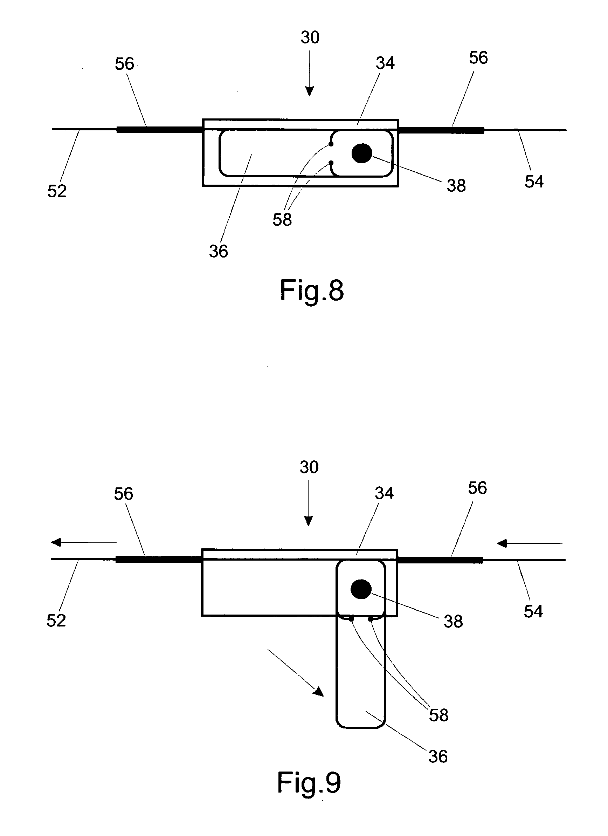

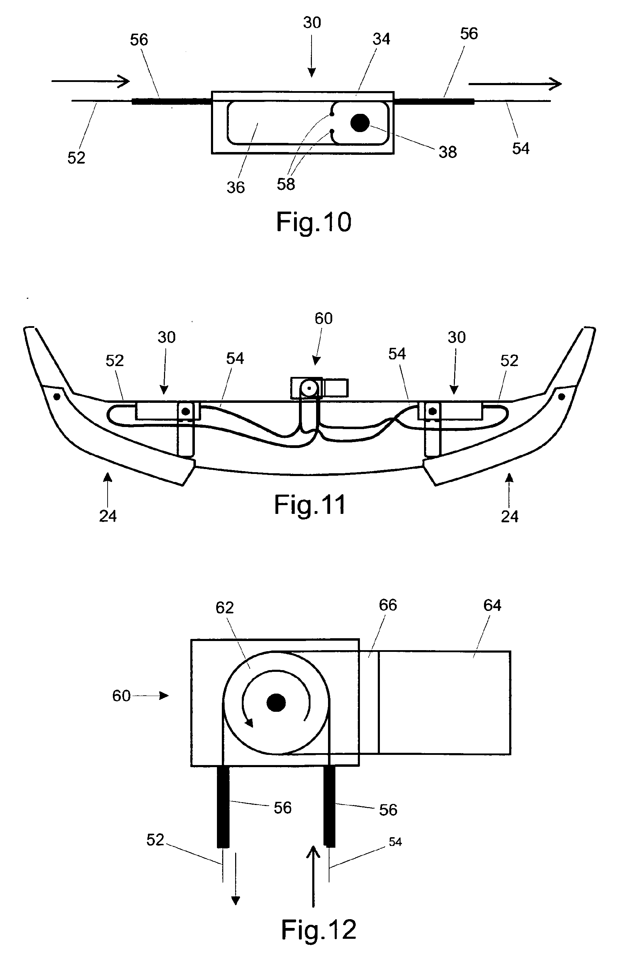

Figures 8, 9 and 10 show a drive mechanism 30 comprising an arm housing 34 and an arm 36 attached to the arm housing 34 by a pivot 38, with the arm 36 in a retracted state in Figure 8. High-strength steel cables 52 and 54 within sheaths 56 extend into the housing 34 adjacent its rear wall. Each cable 52, 54 is fixed to the arm 36 by virtue of enlarged ends 58 embedded in the material of the arm 36 and wrap partially around the pivot end of the arm 36 between the pivot 38 and the rear wall of the housing 34. Thus, movement of the cables 52, 54 parallel to the rear wall of the housing 34 imparts a moment to the arm 36 to cause the arm 36 to turn about the pivot 38. Specifically, movement of the cable 52 to the left as shown in Figure 9 causes the arm 36 to extend substantially orthogonally to the rear wall of the housing 34; this also pulls the cable 54 to the left. Conversely, movement of the cable 54 to the right as shown in Figure 10 causes the arm 36 to retract substantially parallel to the rear wall of the housing 34; this also pulls the cable 52 to the right.

Sheathed high-strength steel cable of the type envisaged for use in this embodiment is widely used in motor vehicle applications, such as in handbrake cables, window regulator cables, bonnet latch release cables and throttle cables.

Figure 11 is an overview of the cable actuation system applied to the rear bumper 20 of Figure 1, and Figure 12 is a more detailed view of the winding mechanism 60 shown in Figure 11. Figure 11 shows that two buffer members 24 are each associated with a respective cable-actuated drive mechanism 30, both of which are driven by a common centrally-mounted winding mechanism 60. This cabling layout envisages four separate cables (two cables 52, 54 per side) on two separate drums 62 being part of the winding mechanism 60 and driven simultaneously by a single drive motor 64 via a gearbox 66. The drums 62 are one above another, so only one drum 62 can be seen in the plan views of Figures 11 and 12. An alternative cabling arrangement would be to use a single drum with two cables mounted in a loop between the two sides.

Turning the motor 64 in one direction winds or unwinds the cables 52, 54 on the drums 62. This forces the arms 36 of the drive mechanisms 30 to extend from their housings 34 and to push out the buffer members 24 against their spring loading. The motor 64 is then reversed to retract the arms 36, allowing the buffer members 24 to retract into the bumper 20 under spring loading once again.

Figure 11 shows the winding mechanism 60 located on the vehicle centreline. However, by virtue of the flexibility of the cable solution, the winding mechanism could be located in a housing anywhere on the vehicle. For example, there is usually space available on the underside of the vehicle, near the spare wheel well.

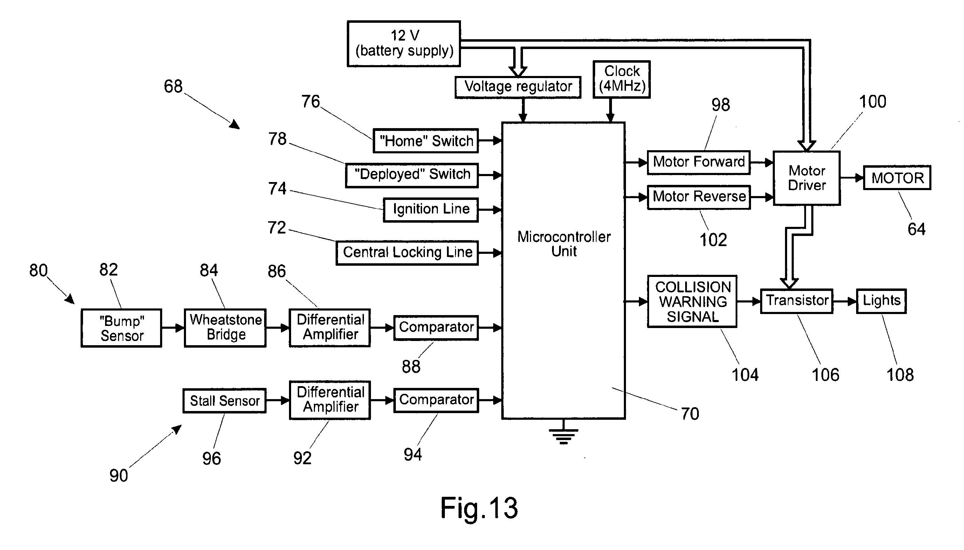

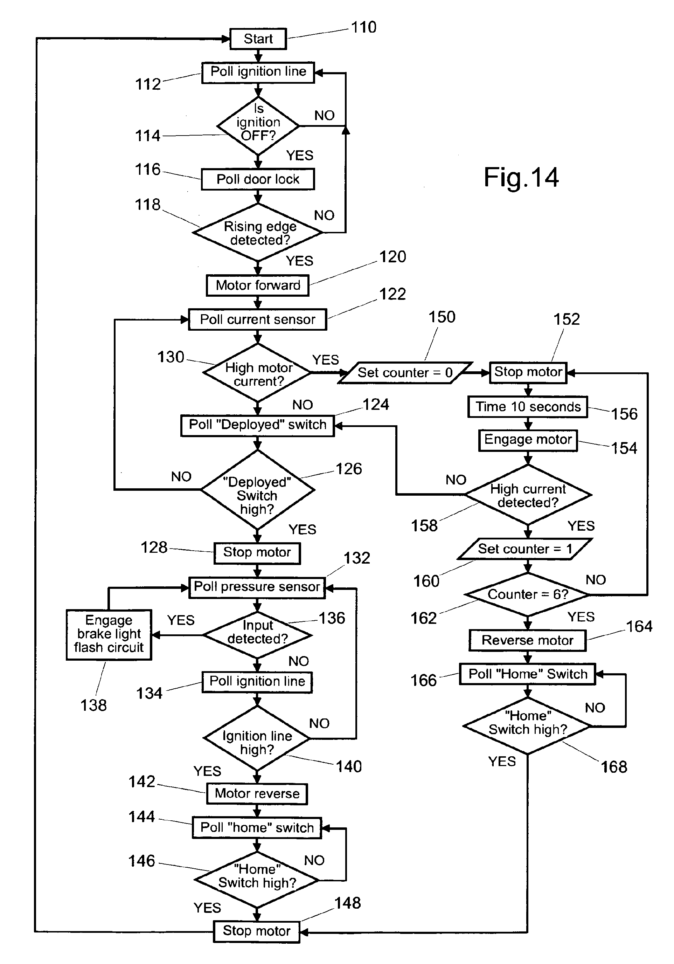

Turning finally to Figures 13 and 14, these diagrams show the hardware and software bases of the system respectively. They relate to a preferred embodiment of the invention in which a collision or 'bump' sensor is monitored while the vehicle is parked so that if another vehicle collides with the parked vehicle, a warning signal such as flashing lights and/or a warning tone is emitted to warn the driver of that other vehicle. It is envisaged that the collision warning system will only activate when a force is applied to the bumper that exceeds a threshold level in magnitude and/or duration. This prevents the system being activated by minor collisions such as pedestrians brushing past the parked vehicle.

Referring particularly to Figure 13, a small electronic control unit (ECU) 68 controls and monitors the functionality of the system. The heart of the ECU 68 is a microcontroller unit (MCU) 70. The MCU 70 runs the software which controls and monitors the inputs and outputs of the ECU 68.

The MCU 70 has the following inputs:
Central Locking line 72 - This is the signal line from the central locking system of the vehicle. This input signals the system to extend the buffer members 24.
Ignition line 74 - The input from the vehicle engine ignition system. This line is activated by the driver before engine ignition, and signals the system to retract the buffer members 24.
"Home" switch 76 - This input is from a micro-switch associated with the drive mechanism 30. When switched 'on', it indicates to the MCU 70 that the arm 36 is in the fully retracted position.
"Deployed" switch 78 - This input is the converse of the "Home" switch, taken from a further micro-switch associated with the drive mechanism 30. When switched 'on', it indicates to the MCU 70 that the arm 36 is fully extended.
"Bump" line 80 - This is an input from electronics responsive to a bump sensor 82. This line is only raised when sensor electronics comprising a Wheatstone bridge 84, a differential amplifier 86 and a comparator 88 have determined that the pressure on a buffer member 24 is sufficient to generate a warning.
"Stall" line 90 - This is an input from a differential amplifier 92 and a comparator 94 responsive to a stall sensor 96 associated with the motor 64. The stall sensor 96 senses current flowing through the motor 64. When extending a buffer member 24, there is a risk that the arm 36 may not be able to extend fully. For example, the vehicle may be parked so close to a wall to the front or rear that the buffer member 24 and hence the arm 36 cannot fully extend. This causes a stall condition that can severely damage the motor 64 and its associated electronics. Hence when the "Stall" line input is raised, the MCU 70 immediately cuts power to the motor 64 and begins a stall routine in the software, to be described below with reference to Figure 14.

The majority of the inputs to the MCU 70 are simple switch inputs and require few additional electronic components. All input lines require a pull-up or pull-down resistor to remove any erroneous inputs that may be caused by floating signal lines. The Ignition and Central Locking lines require a switching transistor to prevent damage to the fragile MCU. As such provisions are routine, those components are omitted from Figure 13 for clarity.

The bump sensor 82 and the stall sensor 96 employ analogue technology and so require additional electronics.

Specifically, the bump sensor 82 is a force sensor such as a strain gauge whose electrical resistance changes in proportion to the force applied to it. The bump sensor 82 is affixed to the arm 36 of the drive mechanism 30 on a specially-machined part that allows the sensor 82 accurately to measure the forces being applied to the arm 36 and hence to the system as a whole.

The bump sensor 82 forms part of the Wheatstone bridge 84 allowing the change of resistance representative of changing force in the arm 36 to be output as a voltage signal. This voltage signal is amplified using the differential amplifier 86, which boosts the signal from a few millivolts up to a +5V to -5V signal. The amplified signal is then inputted to a comparator 88 set to a predetermined threshold. When the input signal goes above that threshold, the comparator immediately switches to a +5V signal which is seen as a switch signal to the MCU 70.

The stall sensor 96 is a resistor of low resistance (typically 0.05Ω) placed in series with the motor. The current flowing through the resistor generates a voltage drop across the resistor that is proportional to the current, as V=IR. The resistor is placed across the differential amplifier 92 to boost the voltage across the resistor to a more usable value. As with the bump sensor 82, the output of the differential amplifier 92 is converted to a digital signal using a tuned comparator 94, which signal is inputted to the MCU 70 in turn.

The MCU 70 has the following outputs:
Motor forward 98 - This output switches the motor driver 100 to turn the motor 64 so as to extend the arms 36 and push out the buffer members 24 until the "Deployed" switch input 78 goes high.
Motor reverse 102 - This output switches the motor driver 100 to turn the motor 64 in the opposite direction so as to retract the arms 36, permitting the buffer members 24 to retract under spring loading, until the "Home" switch input 76 goes high.
Collision warning signal 104 - This output is a low-frequency signal via a transistor 106 to the vehicle lights 108, such as the rear combi-light cluster, causing them to flash as a warning to any driver that may be bumping the vehicle. An audible alert is also possible, preferably using the vehicle horn or alarm sounder.

Concluding now with Figure 14, this illustrates the software programmed into and run by the MCU 70 that controls the system. In essence, the software monitors the various inputs and then outputs the appropriate command to the motor or lights as necessary

The flow diagram of Figure 14 shows the top-level functionality of the software, which operates as follows. The main program will be described first. A stall handling subroutine ancillary to the main program will be described afterwards.

Following initialisation of all variables and I/O ports, the main program enters its starting phase at 110.

The Ignition line is polled at 112 until the line turns low. When the Ignition line is determined to have been turned off at 114, the program begins polling the Central Locking line at 116. If a rising edge of a 200 ms pulse in the Central Locking line is seen at 118, indicative of door locking, then the main program moves out of the polling loop into the next phase of the program. Otherwise the main program returns to 112 to check if the Ignition line is on and back to checking the Central Locking line at 116. This prevents the program code being trapped in the event that the vehicle ignition is turned off the straight back on again.

Once the Central Locking line is seen as high, the motor 64 is engaged at 120 to extend the arm 36 and hence the buffer member 24. During that movement, the main program polls the "Stall" and "Deployed" inputs at 122 and 124 respectively. If the "Deployed" input is seen as high at 126, then the motor is halted at 128 as the arm 36 is fully extended. The main program then moves out of the polling loop. Conversely if "Stall" is seen as high at 130 by virtue of high current in the motor 64, the program enters the stall handling subroutine which will be described below.

When the arm 36 and hence the buffer member 24 are extended, the main program polls two inputs continuously: the Bump line at 132 and the Ignition line at 134. If the "Bump" line goes high as detected at 136, the program turns on flash circuitry at 138 which in turn switches the vehicle exterior lights (in this case the rear brake lights) on and off at a set frequency. If the Ignition line goes high as detected at 140, then the motor 64 is triggered in reverse at 142 to retract the arm 36 which allows the buffer members 24 to resume their retracted positions. The "Home" line is polled at 144 during that reverse movement until, when the arm 36 is fully retracted, the "Home" line goes high as detected at 140. That stops the motor 64 at 148, whereupon the program loops back to the start at 110.

The stall handling subroutine operates as follows. When the current sensor indicates a stall condition at 130 due to high current in the motor 64, an internal counter is set to zero at 150. The motor 64 is then stopped at 152 and re-started at 154 after a ten-second delay at 156. The length of that delay can be varied in software as desired. If the current sensor is determined to be "low" at 158, the subroutine returns to the main program at 124. If the current sensor is still "high" at 158, the subroutine continues after incrementing the counter at 160. If the counter value is determined at 162 to be less than six, the subroutine loops back to 152, stopping the motor 64 and initiating another delay at 156 before re-starting the motor 64 at 154 and measuring the current again at 158. If and when the counter value reaches six (again, that integer can be varied in software as desired), the motor 64 is reversed at 164. At this point it is determined that the system is trying to push the buffer members 24 into an immovable object. Consequently, the arm 36 is retracted by reversing the motor 64 to prevent damage to the motor 64 and circuitry. The "Home" line is polled at 166 during that reverse movement until, when the arm 36 is fully retracted, the "Home" line goes high as detected at 168. That stops the motor 64 at 148, whereupon the program loops back to the start at 110.

Many variations are possible within the inventive concept. For example, in the embodiment illustrated, the rubbing strip 28 is unpainted but it may of course be painted or otherwise coloured, for example to a body-coloured A-class finish if desired.

The drive mechanism 30 can take various forms. For example, the arm 36 may be pressed, fabricated or machined from metal such as aluminium but is preferably moulded of EA foam to reduce cost, to minimise weight and further to improve impact protection. Other possibilities are for the arm 36 to be a crushable metal fabrication or pressing, like a conventional crush can or stay, or an inexpensive hollow crushable plastics component, as employed in new crush can and bumper beam technology.

The arm housing 34 can be of metal, plastics or other low-cost material. For example, a prototype arm housing has been milled from aluminium, whereas the use of a metal pressing is more likely for mass production. In any event, the drive mechanism 30 is preferably designed to be applied to more than one vehicle model for economies of scale.

The drive mechanism 30 can be actuated in various ways. The embodiment described above with reference to Figures 8 to 12 employs cable actuation but other actuators are possible, for example employing hydraulics, pneumatics, solenoids or stepper motors. It is also possible for the drive mechanism 30 positively to drive retraction of a buffer member 24 in addition to its extension, rather than relying upon spring-loading for retraction. For this purpose, the arm 36 may be a crank that remains pivotally attached to the buffer member 24 rather than a cam that merely presses against the buffer member 24 when extended.

Using a MCU 70 with an integrated ADC (Analogue to Digital Converter) removes the need for the comparators 88, 94 for both the bump sensor 82 and the stall sensor 96. The use of a multi-channel ADC would reduce the component count and hence the cost of the ECU 68 and also allow greater control of the inputs by using software.

In view of these and other variations, reference should be made to the appended claims rather than the foregoing specific description to determine the scope of the invention.

## Claims

1. A collision protection system for a vehicle, the system comprising:
a controller (68),
at least one cable-operated actuator; and
at least one buffer member (24) movable by the actuator in response to the controller (68) between a retracted position for driving the vehicle and an extended position for parking the vehicle;
wherein the actuator includes an arm (36), acting as a cam or crank, configured to bear against or engage with the buffer member (24),
**characterized in that** the arm (36) is pivotable about a pivot axis with respect to a vehicle-mountable housing (34), and said housing (34) includes a wall adjacent the pivot axis against which a pivot end of the arm (36) bears when the arm (36) is extended, the wall and the extended arm (36) together defining a load path that transmits collision loads directly from the arm (36) to the housing (34) via the wall.

2. The system of Claim 1, wherein the buffer member (24) is biased into the retracted position.

3. The system of Claim 1 or Claim 2, wherein the buffer member (24) comprises a core (26) and an interchangeable external rubbing strip (28) carried by, but separable from, the core (26).

4. The system of any preceding claim, wherein the controller (68) is responsive to vehicle locking and/or vehicle engine ignition to move the or each buffer member

5. The system of Claim 4, wherein the controller (68) is configured to detect vehicle engine ignition and, in response, to move the or each buffer member (24) into the retracted position.

6. The system of any preceding claim, wherein the buffer member (24) and the actuator are carried by a carrier (48) that is adapted for insertion into an aperture in a vehicle bumper 20.

7. The system of any preceding claim, further comprising a collision warning means for generating an alarm signal to warn of collision or impending collision.

8. A method for protecting a vehicle from collisions when parked, the method comprising using at least on cable-operated actuator to extend one or more retractable buffer members (24) from the vehicle when parked;
wherein the actuator includes an arm (36), acting as a cam or crank, configured to bear against or engage with the buffer member (24),
**characterized in that** the arm (36) is pivotable about a pivot axis with respect to a vehicle-mountable housing (34), and said housing (34) includes a wall adjacent the pivot axis against which a pivot end of the arm (36) bears when the arm (36) is extended, the wall and the extended arm (36) together defining a load path that transmits collision loads directly from the arm (36) to the housing (34) via the wall.

## Patentansprüche

1. Kollisionsschutzsystem für ein Fahrzeug, wobei das System Folgendes umfasst:
eine Steuerung (68);
mindestens ein Stellglied mit Seilsteuerung; und
mindestens ein Dämpferelement (24), das von dem Stellglied als Reaktion auf die Steuerung (68) zwischen einer eingezogenen Position zum Fahren des Fahrzeugs und einer ausgefahrenen Position zum Parken des Fahrzeugs beweglich ist,
wobei das Stellglied einen Arm (36), der als Kurve oder Kurbel dient, aufweist, der dafür eingerichtet ist, an dem Dämpferelement (24) anzuliegen oder darin einzugreifen,
**dadurch gekennzeichnet, dass** der Arm (36) um eine Schwenkachse bezogen auf ein am Fahrzeug montierbares Gehäuse (34) schwenkbar ist und das Gehäuse (34) eine Wand angrenzend an die Schwenkachse aufweist, an der ein Schwenkende des Arms (36) anliegt, wenn der Arm (36) ausgestreckt ist, wobei die Wand und der ausgestreckte Arm (36) gemeinsam einen Lastpfad definieren, der Kollisionskräfte unmittelbar vom Arm (36) über die Wand auf das Gehäuse (34) überträgt.

2. System nach Anspruch 1, wobei das Dämpferelement (24) in die eingezogene Position vorgespannt ist.

3. System nach Anspruch 1 oder Anspruch 2, wobei das Dämpferelement (24) einen Kern (26) und eine austauschbare äußere Schutzleiste (28) umfasst, die von dem Kern (26) getragen wird, aber davon getrennt werden kann.

4. System nach einem vorhergehenden Anspruch, wobei die Steuerung (68) auf das Abschließen des Fahrzeugs und/oder das Zünden des Fahrzeugmotors reagiert, um das oder jedes Dämpferelement (24) zu bewegen.

5. System nach Anspruch 4, wobei die Steuerung (68) eingerichtet ist, das Zünden des Fahrzeugmotors zu erfassen und als Reaktion darauf das oder jedes Dämpferelement (24) in die eingezogene Position zu bewegen.

6. System nach einem vorhergehenden Anspruch, wobei das Dämpferelement (24) und das Stellglied von einem Träger (48), der zum Einsetzen in eine Öffnung in einem Fahrzeugstoßfänger (20) geeignet ist, getragen werden.

7. System nach einem vorhergehenden Anspruch, ferner umfassend ein Kollisionswarnmittel zum Erzeugen eines Alarmsignals zum Warnen vor einer Kollision oder einer drohenden Kollision.

8. Verfahren zum Schützen eines Fahrzeugs vor Kollisionen im geparkten Zustand, wobei das Verfahren das Verwenden von mindestens einem Stellglied mit Seilsteuerung umfasst, das ein oder mehrere einziehbare Dämpferelemente (24) aus dem Fahrzeug ausfährt, wenn es geparkt ist,
wobei das Stellglied einen Arm (36), der als Kurve oder Kurbel dient, aufweist, der dafür eingerichtet ist, an dem Dämpferelement (24) anzuliegen oder darin einzugreifen,
**dadurch gekennzeichnet, dass** der Arm (36) um eine Schwenkachse bezogen auf ein am Fahrzeug montierbares Gehäuse (34) schwenkbar ist und das Gehäuse (34) eine Wand angrenzend an die Schwenkachse aufweist, an der ein Schwenkende des Arms (36) anliegt, wenn der Arm (36) ausgestreckt ist, wobei die Wand und der ausgestreckte Arm (36) gemeinsam einen Lastpfad definieren, der Kollisionskräfte unmittelbar vom Arm (36) über die Wand auf das Gehäuse (34) überträgt.

## Revendications

1. Système anti-collision pour véhicule, le système comprenant :
une unité de commande (68) ;
au moins un actionneur commandé par câble ; et
au moins un élément amortisseur (24) déplaçable par l'actionneur en réponse à l'unité de commande (68) entre une position rétractée pour conduire le véhicule et une position déployée pour garer le véhicule ;
dans lequel l'actionneur comporte un bras (36), agissant en tant que came ou manivelle, configuré pour porter contre ou s'engrener avec l'élément amortisseur (24) ;
**caractérisé en ce que** le bras (36) est pivotable autour d'un axe pivot relativement à un logement (34) montable sur véhicule et ledit logement (34) comporte une paroi adjacente à l'axe pivot contre laquelle porte une extrémité pivot du bras (36) quand le bras (36) est déployé, la paroi et le bras (36) déployé définissant ensemble un chemin de charge qui transmet des charges de collision directement du bras (36) au logement (34) par l'intermédiaire de la paroi.

2. Système selon la revendication 1, dans lequel l'élément amortisseur (24) est chargé préliminairement en la position rétractée.

3. Système selon la revendication 1 ou la revendication 2, dans lequel l'élément amortisseur (24) comprend un noyau (26) et une bandelette de frottement (28) externe interchangeable portée par le noyau (26) mais séparable de celui-ci.

4. Système selon l'une quelconque des revendications précédentes, dans lequel l'unité de commande (68) est sensible au verrouillage du véhicule et/ou à l'allumage du moteur du véhicule afin de déplacer le ou chaque élément amortisseur (24).

5. Système selon la revendication 4, dans lequel l'unité de commande (68) est configurée pour détecter l'allumage du moteur du véhicule et, en réponse, déplacer le ou chaque élément amortisseur (24) en la position rétractée.

6. Système selon l'une quelconque des revendications précédentes, dans lequel l'élément amortisseur (24) et l'actionneur sont portés par un support (48) adapté pour être inséré dans une ouverture d'un pare-choc (20) de véhicule.

7. Système selon l'une quelconque des revendications précédentes, comprenant en outre un moyen d'avertissement de collision pour générer un signal d'alarme servant à avertir d'une collision ou d'une collision imminente.

8. Procédé de protection d'un véhicule garé contre les collisions, le procédé comprenant l'utilisation d'au moins un actionneur commandé par câble afin de déployer un ou plusieurs éléments amortisseurs rétractables (24) depuis le véhicule garé ;
dans lequel l'actionneur comporte un bras (36), agissant en tant que came ou manivelle, configuré pour porter contre avec l'élément amortisseur (24) ou s'engrener avec celui-ci ;
**caractérisé en ce que** le bras (36) est pivotable autour d'un axe pivot relativement à un logement (34) montable sur véhicule et ledit logement (34) comporte une paroi adjacente à l'axe pivot contre laquelle porte une extrémité pivot du bras (36) quand le bras (36) est déployé, la paroi et le bras (36) déployé définissant ensemble un chemin de charge qui transmet des charges de collision directement du bras (36) au logement (34) par l'intermédiaire de la paroi.
